# EUROPEAN PATENT APPLICATION

(11) **EP 1 337 128 A1**
(43) Date of publication of application: **20.08.2003**
(21) Application number: 03003480.5
(22) Date of filing: 14.02.2003
(51) Int. Cl.: H04Q 11/04

(54) **Cell counter for utopia interface**

(30) Priority: 15.02.2002 JP 2002039329
(71) Applicant: NEC CORPORATION, Tokyo (JP)
(72) Inventor: Takaharu, Innami, Minato-ku, Tokyo (JP)
(74) Representative: VOSSIUS & PARTNER

(57) **Abstract**

A cell counter is connected to a UTOPIA level-2 interface (30, 50) between a UTOPIA bus controller (10) and multiple PHY devices. The cell counter has a PHY identifying section for identifying one of multiple PHY devices using PHY address data on an address bus of the UTOPIA level-2 interface. As long as TXENB_B/RXENB_B is asserted, the number of times TXSOC/RXSOC has been asserted is counted to produce a cell count for the identified PHY device.

## Description

The present invention relates to a cell counter for a UTOPIA (Universal Test & Operations PHY Interface for ATM) interface and in particular to a cell counter provided on a UTOPIA level-2 bus which ensures interoperability of multiple slaves with a bus master.

In a system using a UTOPIA level-2 bus, counting cells transmitted on the UTOPIA level-2 bus is necessary to determine whether a problem such as cell less occur in the system. Accordingly, such a system is provided with a cell counting function.

For example, United States Patent No. 5,802,073 discloses a built-in self test functional system block for UTOPIA interface, which includes a transmitted cell counter and a received cell counter. The transmitted cell counter counts TXSOC pulses, where TXSOC is a control signal indicating the start of a cell on a TXDATA bus.

However, the above cell counter counts the total number of transmitted or received cells. In the UTOPIA level-2 bus interconnected a plurality of PHY devices with a bus master, therefore, it is not possible to identify a PHY device where a cell loss occurs. Further, it is necessary to precisely count the number of transmitted or received cells so as to make evaluations of the system using the UTOPIA level-2 bus.

An object of the present invention is to provide a cell counter allowing precise counting of cells for each of multiple physical devices.

According to the present invention, a circuit for counting cells transferred between a master and each of a plurality of slaves through a UTOPIA (Universal Test & Operations PHY Interface for ATM) level-2 interface, includes: a slave identifying section for identifying one of the plurality of slaves using slave address data on an address bus of the UTOPIA level-2 interface, wherein an identified slave is selected as a destination of a cell to be transmitted; and a counting section for counting start-of-cell indicating signals during a phase for the identified slave.

According to an aspect of the present invention, a circuit for counting cells transmitted from a master to each of a plurality of slaves through a UTOPIA (universal Test & Operations PHY Interface for ATM) level-2 interface, includes: a slave identifying section for identifying one of the plurality of slaves using slave address data en an address bus of the UTOPIA level-2 interface; and a cell counting section for counting the number of times TXSOC has been asserted when TXENB_B is held active, to produce a count of cells transmitted to an identified slave of the plurality of slaves.

The slave identifying section may include: an address latch for latching the slave address data; and a comparing section for comparing the slave address data with a unique address assigned to each of the plurality of slaves to produce a comparison result for a corresponding slave, where the comparison result is asserted when the slave address data is equal to the unique address of the corresponding slave.

The cell counting section may include: an enable signal generating section for generating a count enable signal depending on the comparison result, the TXSOC, and the TXENB_B; and a counting section for counting the count enable signal to produce a transmission cell count for the corresponding slave.

According to another aspect of the present invention, a circuit for counting colls transmitted from each of a plurality of slaves to a master through a UTOPTA (Universal Test & Operations PHY Interface for ATM) level-2 interface, includes: a slave identifying section for identifying one of the plurality of slaves using slave address data on an address bus of the UTOPIA level-2 interface; and a cell counting section for counting the number of times RXSOC has been asserted when RXENB_B is held active, to produce a count of cells received from an identified slave of the plurality of slaves.

The slave identifying section may include: an address latch for latching the slave address data; a comparing section for comparing the slave address data with a unique address assigned to each of Lhe plurality of slaves to produce a comparison result for a corresponding slave, where the comparison result is asserted when the slave address data is equal to the unique address of the corresponding slave; and a delay section for delaying the comparison result by a predetermined clock cycle to produce a delayed comparison result so that the delayed comparison result coincides with the RXSOC on the UTOPIA level-2 interface.

The cell counting section may include: an enable signal generating section for generating a count enable signal depending on the delayed comparison result, the RXSOC, and the TXENB_B; and a counting section for counting the count enable signal to produce a transmission cell count for the corresponding slave.
Fig. 1 is a block diagram showing a functional structure of a UTOPIA level-2 interface system provided with a TX cell counter according to a first embodiment of the present invention;
Fig. 2 is a time chart showing an operation of the TX cell counter according to the first embodiment of the present invention;
Fig. 3 is a block diagram showing a functional structure of a UTOPIA level-2 interface system provided with a RX cell counter according to a second embodiment of the present invention; and
Fig. 4 is a timing chart showing an operation of the RX cell counter according to the second embodiment of the present invention.

Preferred embodiments of the present invention will be described taking as an example a system composed of a plurality of slave devices interconnected with a UTOPIA bus master via a UTOPIA lovel-2 bus.

### (1) First embodiment

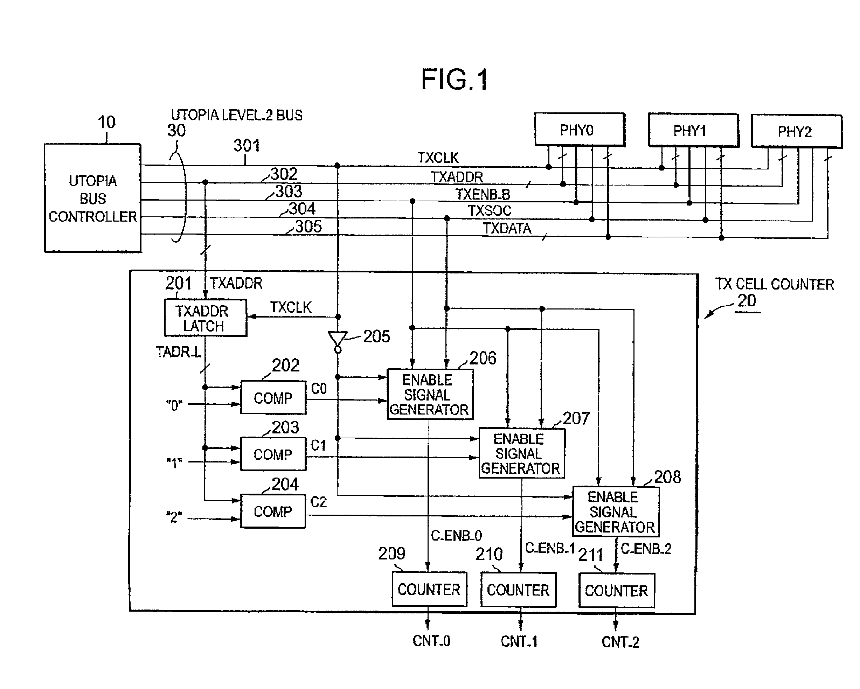

Referring to Fig. 1, multiple physical devices (here, PHY0, PHY1 and PHY2) are interconnected with a UTOPIA bus controller 10 by a UTOPIA level-2 bus 30. The physical devices PHY0, PHY1 and PHY2 are slaves and the UTOPIA bus controller 10 is a master. A TX cell counter 20 is connected to the UTOPIA level-2 bus 30 to count the number of cells transmitted from the UTOPIA bus controller 10 to each of the physical devices PHY0, PHY1 and PHY2.

The UTOPIA level-2 bus 30 is composed of a TXCLK line 301, a 5-bit TXADDR bus 302, a TXENB_B line 303, a TXSOC line 304, and a 8-bit TXDATA bus 305. As known well, TXCLK is a clock signal on which the transmission operation of the system is performed. TXADDR is 5-bit data indicating the destination address of a physical device Lo which the UTOPIA bus controller 10 transmits data through the TXDATA bus 305. TXENB_B is a transmit enable signal which is active low and indicates that the UTOPIA bus controller 10 has a cell to be transferred to a destination one of the physical devices PHY0, PHY1 and PHY2. TXSOC is a control signal indicating the start of a cell on the TXDATA bus 30b. TXDATA is 8-bit data transmitted from the UTOPIA bus controller 10 to a destination one of the physical devices PHY0, PHY1 and PHY2 through the TXDATA bus 305.

Hereinafter, it is assumed that the respective physical devices PHY0, PHY1 and PHY2 have unique addresses "0", "1" and "2" assigned thereto. In general, unique addresses may be assigned to respective ones of n physical devices PHY0-PHYn.

### TX cell counter

The TX cell counter 20 is composed mainly of a PHY identifying section and a counting section.

The PHY identifying section is composed of a TXADDR latch 201 and three comparators 202-204 each corresponding to the physical devices PHY0-PHY2. The TXADDR latch 201 latches address data TXADDR on the TXADDR bus 302 according to the clock signal TXCLK on the TXCLK line 301. The latched address data TADR_L is output in common to the comparators 202-204.

The comparator 202 compares the address data TADR_L with the unique address "0" of the physical device PHY0. Similarly, the respective comparators 203 and 204 compare the address data TADR_L wiLh the unique addresses "1" and "2" of the physical devices PHY1 and PHY2. Each of the comparators 202-204 asserts its output signal C when the address data TADR L is equal to a corresponding unique address. Accordingly, a destination physical device can be identified depending on which comparator asserts its output signal. For example, when the address data TADR_L is equal to "0", only the comparator 202 asserts its output signal C0 and the other comparators 203 and 204 do not assert their output signals C1 and C2, which remain inactive. Therefore, it is determined that the physical device PHY0 is the destination of transmission data TXDATA on the TXDATA bus 305.

The counting section is composed of an inverter 205, enable signal generators 206-208, and counters 209-211. The inverter 205 inputs the clock signal TXCLK from the TXCLK line 301 and outputs an inverted clock signal to each of the enable signal generators 206-208.

The respective enable signal generators 206-208 input the inverted clock signal from the inverter 205, the comparison result signals CO-C2 from the comparators 202-204, the TXENB_B signal from the TXENB_B line 303, and the TXSOC signal from the TXSOC line 304. The respective enable signal generators 206-208 generate count enable signals C_ENB_0, C_ENB_1 and C_ENB_2 from the comparison result signals C0, C1 and C2, the TXENB_B signal and the TXSOC signal according to the inverted clock signal. Each of the counters 209-211 counts a corresponding enable signal C_ENB to produce a corresponding cell count CNT.

### TX cell counting operation

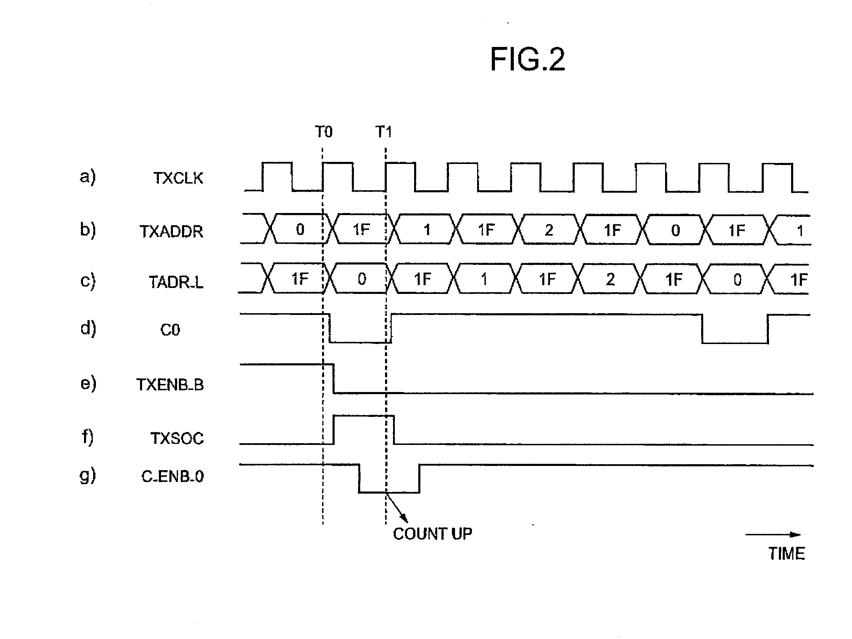

For simplicity, taking as an example the case where TXDATA is transmitted to the physical device PHY0 (PHY0 phase), the TX cell counting operation will be described with reference to Fig. 2.

Referring to Fig. 2, the UTOPIA bus controller 10 operates on the TXCLK signal. First, the UTOPTA bus controller 10 holds TXENB_B high (inactive) and transmits a TXADDR signal identifying the physical device PHY0. When the TXENB_B signal is held high, each physical device determines whether TXADDR on the TXADDR bus 302 is equal to the unique address of its own. In this example, only the physical device PHY0 determines that TXADDR on the TXADDR bus 302 is equal to its unique address and therefore the physical device PHY0 is selected for cell transmission. After the UTOPIA bus controller 10 asserts TXENB_B (active), TXSOC is asserted to start cell transmission to the physical device PHY0. In other words, each time TXSOC is asserted in the PHY0 phase, a single cell is transmitted to the physical device PHY0.

The TX cell counter 20 identifies cell transmission destination and then performs cell counting when TXENB_B is held low and TXSOC is held high.

More specifically, the TXADDR latch 201 latches TXADDR data on the TXADDR bus 302 at a rising edge (T0) of the TXCLK signal. In this example, the TXADDR latch 201 latches TXADDR "0" identifying the physical device PHY0. The latched data TADR_L is output to the comparators 202-204. Since the TADR_L indicates "0", only the comparator 2C2 asserts its output C0 during the TADR_L being "0".

Each of the enable signal generators 206-208 makes a determination of enable signal generation according to the inverted TXCLK signal inputted from the inverter 205. Specifically, at the rising edge of the inverted TXCLK signal, or the falling edge of the TXCLK signal, each of the enable signal generators 206-208 determines whether the following conditions are all satisfied at a falling edge of the TXCLK signal:
1) a corresponding comparison result C is asserted (here, held low);
2) the TXENB_B signal is held low (asserted) ; and
3) the TXSOC signal is held high (asserted).

Since the TXENB_B signal and the TXSOC signal are supplied in common to the enable signal generators 206-208, the enable signal generation is determined depending on whether a corresponding comparison result C is asserted.

In this example, only the comparator 202 asserts its output C0. Accordingly, the enable signal generator 206 asserts a count enable signal C_ENB_0 when the inverted TXCLK signal goes high (the TXCLK signal goes low). When receiving the count enable signal C_ENB_0, the counter 209 increments by one at the timing of T1 (a rising edge of the TXCLK signal). Since the other enable signal generators 207 and 208 do not assert their count enable signals C_ENB_1 and C_ENB_2, neither the counter 210 nor the counter 211 increments.

Using the inverted TXCLK signal, the counter 209 counts up at the approximate center of the asserted count enable signal C_ENB_0 as shown in Fig. 2(g) ), resulting in more precise counting operation with enhanced resistance to noise or the like on the bus lines.

After the clock cycle T0-T1, TXADDR "1" on the TXADDR bus 302 is latched into the TXADDR latch 201, which causes only the comparator 203 to assert its output C1. At this time, however, the TXSOC signal is being held low. Accordingly, the condition 3) is not satisfied and the enable signal generator 207 does not assert its count enable signal C_ENB_1. It is the same with the case where TXADDR "2" on the TXADDR bus 302 is latched into the TXADDR latch 201.

When TXENB_B becomes high (inactive) and TXADDR identifying the physical device PHY1 is transmitted on the TXADDR bus 302, the cell transmission phase is changed to PHY1 phase. In the PHY1 phase, as described above, only the comparator 203 asserts its output C1, which causes the enable signal generator 207 to assert its count enable signal C_ENB_1, resulting in the counter 210 incrementing by one. It is the same with a PHY2 phase where TXDATA is transmitted to the physical device PHY2.

In this manner, the UTOPIA bus controller 10 sequentially outputs multiple PHY addresses on the TXADDR bus 302 to transmit a cell to each selected physical, device. Accordingly, the TX cell counter 20 identifies the selected physical device and counts the numbers of cells transmitted to respective ones of the physical devices PHY0-PHY2 by looking at both TXSOC and TXENB_B to produce count values CNT_0, CNT_1 and CNT_2.

In this embodiment, the TX cell counter 20 includes three comparators 202-204, three corresponding enable signal generators 206-208 and three counters 209-211. Alternatively, a single comparator, a single enable signal generator and a single counter may be used to form an equivalent of the TX cell counter 20 by a controller sequentially changing a variable "N" supplied to the comparator among "0", "1" and "2". Such cell counter will be described taking a RX cell counter as example.

### (II) Second embodiment

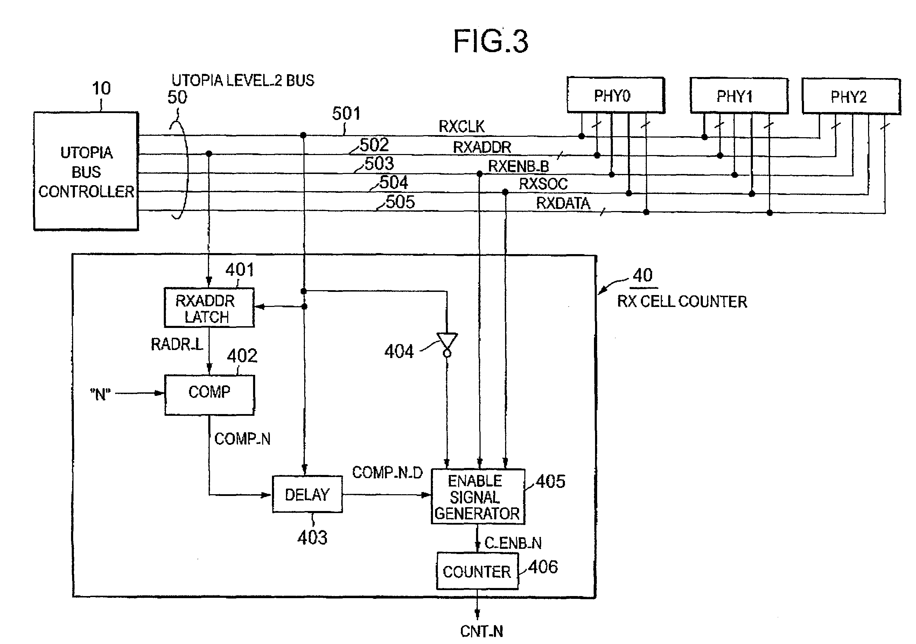

Referring to Fig. 3, multiple physical devices (here, PHY0 PHY1 and PHY2) are interconnected with the UTOPIA bus controller 10 by a UTOPIA level-2 bus 50. The physical devices PHY0, PHY1 and PHY2 are slaves and the UTOPIA bus controller 10 is a master. A RX cell 1 counter 40 is connected to the UTOPIA level-2 bus 50 to count the number of cells transmitted from each of the physical devices PHY0, PHY1 and PHY2 to the UTOPIA bus controller 10.

The UTOPIA level-2 bus 50 is composed of a RXCLK line 501, a 5-bit RXADDR bus 502, a RXENB_B line 503, a RXSOC line 504, and a 8-bit RXDATA bus 505. As known well, RXCLK is a clock signal on which the transmission operation of the system is performed. RXADDR is 5-bit data indicating the address of a physical device from which the UTOPIA bus controller 10 receives data through the RXDATA bus 505. RXENB_B is a receive enable signal which is active low and indicates that the UTOPIA bus controller 10 is ready to receive a cell from one of the physical devices PHY0, PHY1 and PHY2. RXSOC is a control signal indicating the start of a cell from the physical device on the RXDATA bus 505. RXDATA is 8-bit data transmitted from one of the physical devices PHY0, PHY1 and PHY2 to the UTOPIA bus controller 10 through the RXDATA bus 505.

Hereinafter, it is assumed that the respective physical devices PHY0, PHY1 and PHY2 have unique addresses "0", "1" and "2" assigned thereto. In general, unique addresses may be assigned to respective ones of n physical devices PHY0-PHYn.

### RX cell counter

The RX cell counter 40 is composed mainly of a PHY identifying section and a counting section.

The PHY identifying section is composed of a RXADDR latch 401, a comparator 402 and a delay section 403. The RXADDR latch 401 latches address data RXADDR on the RXADDR bus 502 according to the clock signal RXCLK on the RXCLK line 501. The latched address data RADR_L is output to the comparator 402.

The comparator 402 compares the address data RADR_L with "N" which is a sequentially selected one of the unique addresses "0", "1" and "2" of the physical devices PHY0, PHY1 and PHY2. Such selection of N may be performed by a controller (not shown) . The comparator 402 asserts its output signal COMP_N when the address data RACP_L is equal to "N". Accordingly, a source physical device can be identified depending on the value of "N" at which the comparator 402 asserts its output signal. For example, when the address data RADR_L is equal to "0", the comparator 402 asserts its output only when N = 0. Therefore, it is determined that the physical device PHY0 is the source of transmission data RXDATA on the RXDATA bus 505.

The comparison result COMP_N is output to the delay section 403, which delays it by one clock of the RXCLK signal to output a delayed comparison result COMP_N_D to an enable signal generator 405. As distinct from cell transmission as shown in Fig. 1, the physical devices PHY0-PHY2 confirm that the RXENB_B signal is asserted, and the RXSOC signal is output after a lapse of one clock since then. Accordingly, in order to identify a physical device originating a cell, the latch timing of RXADDR or the comparison timing must be delayed by one clock. The delay section 403 is provided to generate such a one-clock delay.

The counting section is composed of an inverter 404, the enable signal generator 405, and a counter 406. The inverter 404 inputs the clock signal RXCLK from the RXCLK line 501 and outputs an inverted clock signal to the enable signal generator 405.

The enable signal generator 405 inputs the inverted clock signal from the inverter 404, the delayed comparison result COMP_N_D from the delay section 403, the RXENB_B signal from the RXENB_B line 503, and the RXSOC signal from the RXSOC line 504. The enable signal generator 405 generates a count enable signal C_ENB_N from the delayed comparison result COMP_N_D, the RXENB_B signal and the RXSOC signal according to the inverted clock signal. The counter 406 counts the count enable signal C_ENB_N to produce a cell count CNT_N.

### RX cell counting operation

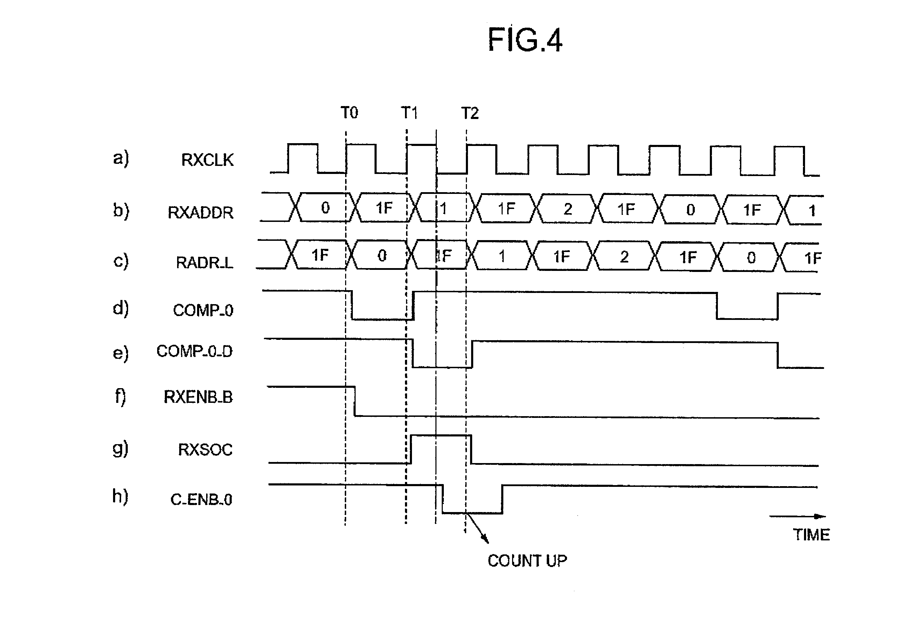

For simplicity, taking as an example the case where RXDATA is transmitted from the physical device PHY0 (PHY0 phase), the RX cell counting operation will be described with reference to Fig. 4.

Referring to Fig. 4, the UTOPIA bus controller 10 operates on the RXCLK signal. First, the UTOPIA bus controller 10 holds RXENB_B high (inactive) and transmits a RXADDR signal identifying the physical device PHY0. When the RXENB_B signal is held high, each physical device determines whether RXADDR on the RXADDR bus 502 is equal to the unique address of its own. In this example, only the physical device PHY0 determines that RXADDR on the RXADDR bus 502 is equal to its unique address and therefore the physical device PHY0 is allowed to transmit a cell to the UTOPIA bus controller 10. After the UTOPIA bus controller 10 asserts RXENB_B (active), RXSOC is asserted to start cell reception from the physical device PHY0. In other words, each time RXSOC is asserted in the PHY0 phase, a single cell is received from the physical device PHY0.

The RX cell counter 40 identifies a cell transmission source and then performs cell counting when RXENB_B is held low and RXSOC is held high.

More specifically, the RXADDR latch 401 latches RXADDR data on the RXADDR bus 502 at a rising edge (T0) of the RXCLK signal. In this example, the RXADDR latch 401 latches RXADDR "0" identifying the physical device PHY0. The latched data RADR_L is output to the comparator 402. Since the RADR_L indicates "0", the comparator 402 asserts its output COMP_0 during the RADR_ L being "0". The delay section 403 delays the comparison result COMP_0 by one clock of the RXCLK signal to output the delayed comparison result COMP N D to the enable signal generator 405 in synchronization to the RXSOC signal.

The enable signal generator 405 makes a determination of enable signal generation according to the inverted RXCLK signal inputted from the inverter 404. Specifically, at the rising edge of the inverted RXCLK signal, or the falling edge of the RXCLK signal, the enable signal generator 405 determines whether the following conditions are all satisfied at a falling edge of the RXCLK signal:
1) the delayed comparison result COMP_N_D is asserted (here, held low);
2) the RXENB_B signal is held low (asserted); and
3) the RXSOC signal is held high (asserted).

In this example, the comparator 402 asserts its output COMP_0 when N = 0. Accordingly, the enable signal generator 405 asserts a count enable signal C_ENB_0 when the inverted RXCLK signal goes high (the RXCLK signal goes low). When receiving the count enable signal C_ENB_0, the counter 406 increments by one at the timing of T2 (a rising edge of the RXCLK signal). When N = 1 or 2, the comparator 402 does not assert its output COMP_1 or COMP_2 and therefore the enable signal generator 405 does not assert its count enable signal.

Using the inverted RXCLK signal, the counter 406 counts up at the approximate center of the asserted count enable signal C_ENB_0 as shown in Fig. 4(h), resulting in more precise counting operation with enhanced resistance to noise or the like on the bus lines.

In this manner, the UTOPIA bus controller 10 sequentially outputs multiple PHY addresses on the RXADDR bus 502 to receive a cell from each selected physical device. Accordingly, the RX cell counter 40 identifies the selected physical device and counts the numbers of cells received from respective ones of the physical devices PHY0-PHY2 by looking at both RXSOC and RXENB_B to produce count values CNT_0, CNT_1 and CNT_2.

Comparing the circuit structure of Fig. 3 to that of Fig. 1, a substantial difference is just the one-clock delay section 403, which is needed to synchronize RXSOC with the comparison result COMP_N. The other circuit structure and operation are similar to those of the TX cell counter 20 and therefore the details are omitted.

The TX cell counter 20 and the RX cell counter 40 may be implemented by running TX and RX coll counting programs on a program-controlled processor. Each of the TX and RX cell counting programs may include the PHY identifying section and the counting section as described before.

In the case where the TX cell counter 20 and the RX cell counter 40 can be connected Lo the UTOPIA level-2 bus 30 and 50, respectively, the numbers of cells transmitted and received to and from respective ones of the physical devices PHY0-PHY2 can be counted.

As described above, according to the present invention, cell counting operation for each of multiple physical devices can be performed by identifying a selected physical device based on address data on the TXADDR/RXADDR bus of the UTOPUA level-2 bus. Further, the cell counting operation is performed while looking at TXENB_B/RXENB_B and TXSOC/RXSOC and therefore precise cell counting is achieved.

Neither the TX cell counter 20 nor the RX cell counter 40 is connected to the TXDATA bus 305 or RXDATA bus 505. The TX cell counter 20 and the RX cell counter 40 just input necessary signals from the UTOPIA level-2 buses 30 and 50, respectively. Accordingly, the number of cells can be precisely counted without affecting cell transmission and reception.

## Claims

1. A circuit for counting cells transferred between a master (10) and each of a plurality of slaves (PHY0-PHY2) through a UTOPIA (Universal Test & Operations PHY Interface for ATM) level-2 interface (30, 50), **characterized by**:
a slave identifying section (201-204, 401-403) for identifying one of the plurality of slaves using slave address data on an address bus of the UTOPlA level-2 interface, wherein an identified slave is selected as a destination of a cell to be transmitted; and
a counting section (206-211, 405-406) for counting start-of-cell indicating signals during a phase for the identified slave.

2. A circuit for counting cells transferred between a master (10) and each of a plurality of slaves (PHY0-PHY2) through a UTOPIA (Universal Test & Operations PHY interface for ATM) level-2 interface (30), **characterized by**:
a slave identifying section (201-204) for identifying one of the plurality of slaves using slave address data on an address bus of the UTOPIA level-2 interface; and
a cell counting section (206-211) for counting the number of times TXSOC has been asserted when TXENB_B is held active, to produce a count of cells transmitted to an identified slave of the plurality of slaves.

3. The circuit according to claim 1 or 2, wherein
the slave identifying section comprises:
an address latch (201) for latching the slave address data; and
a comparing section (202-204) for comparing the slave address data with a unique address assigned to each of the plurality of slaves to produce a comparison result for a corresponding slave, where the comparison result is asserted when the slave address data is equal to the unique address of the corresponding slave, and
the cell counting section comprises:
an enable signal generating section (206-208) for generating a count enable signal depending on the comparison result, the TXSOC, and the TXENB_B; and
a counting section (209-211) for counting the count enable signal to produce a transmission cell count for the corresponding slave.

4. The circuit according to claim 3, wherein the comparing section is composed of a plurality of comparators corresponding to respective ones of the plurality of slaves,
the enable signal generating section is composed of a plurality of enable signal generators corresponding to respective ones of the plurality of slaves, and
the counting section is composed of a plurality of counters corresponding to respective ones of the plurality of slaves.

5. A circuit for counting cells transferred between a master (10) and each of a plurality of slaves (PHY0-PHY2) through a UTOPIA (Universal Test & Operations PHY interface for ATM) level-2 interface (50), **characterized by**:
a slave identifying section (401-403) for identifying one of the plurality of slaves using slave address data on an address bus of the UTOPIA level-2 interface; and
a cell counting section (405, 406) for counting the number of times RXSOC has been asserted when RXENB_B is held active, to produce a count of cells received from an identified slave of the plurality of slaves.

6. The circuit according to claim 5, wherein
the slave identifying section comprises:
an address latch (401) for latching the slave address data;
a comparing section (402) for comparing the slave address data with a unique address assigned Lo each of the plurality of slaves to produce a comparison result for a corresponding slave, where the comparison result is asserted when the slave address data is equal to the unique address of the corresponding slave; and
a delay section (403) for delaying the comparison result by a predetermined clock cycle to produce a delayed comparison result so that the delayed comparison result coincides with the RXSOC on the UTOPIA level-2 interface, and
the cell counting section comprises:
an enable signal generating section (405) for generating a count enable signal depending on the delayed comparison result, the RXSOC, and the RXENB_B; and
a counting section (406) for counting the count enable signal to produce a transmission cell count for the corresponding slave.

7. A method for counting cells transferred between a master and each of a plurality of slaves through a UTOPIA (Universal Test & Operations PHY interface for ATM) level-2 interface, **characterized by** the steps of:
identifying one of the plurality of slaves using slave address data on an address bus of the UTOPIA level-2 interface, wherein an identified slave is selected as a destination of a cell to be transmitted; and
counting start-of-cell indicating signals during a phase for the identified slave.

8. A method for counting cells transmitted from a master to each of a plurality of slaves through a UTOPIA (Universal Test & Operations PHY Interface for ATM) level-2 interface, **characterized by** the steps of:
a) Identifying one of the plurality of slaves using slave address data on an address bus of the UTOPIA level-2 interface; and
b) counting the number of times TXSOC has been asserted for an identified slave of the plurality of slaves when TXENB_B is held active, to produce counts of cells transmitted to respective ones of the plurality of slaves.

9. The method according to claim 8, wherein
the step a) comprises the steps of:
latching the slave address data; and
comparing the slave address data with a unique address assigned to each of the plurality of slaves to produce a comparison result for a corresponding slave, where the comparison result is asserted when the slave address data is equal to the unique address of the corresponding slave, and
the step b) comprises the steps of:
generating a count enable signal depending on the comparison result, the TXSOC, and the TXENB_B; and
counting the count enable signal to produce a transmission cell count for the corresponding slave.

10. A method for counting cells transmitted from each of a plurality of slaves to a master through a UTOPIA (Universal Test & Operations PHY Interface for ATM) level-2 interface,
**characterized by** the steps of:
a) identifying one of the plurality of slaves using slave address data on an address bus of the UTOPIA level-2 interface; and
b) counting the number of times RXSOC has been asserted for an identified slave of the plurality of slaves when RXENB_B is held active, to produce a count of cells received from the identified slave.

11. The method according to claim 10, wherein
the step a) comprises the steps of:
latching the slave address data;
comparing the slave address data with a unique address assigned to each of the plurality of slaves to produce a comparison result for a corresponding slave, where the comparison result is asserted when the slave address data is equal to the unique address of the corresponding slave; and
delaying the comparison result by a predetermined clock cycle to produce a delayed comparison result so that the delayed comparison result coincides with the RXSOC on the UTOPIA level-2 interface, and
the step b) comprises the steps of:
generating a count enable signal depending on the delayed comparison result, the RXSOC, and the RXENB_B; and
counting the count enable signal to produce a transmission cell count for the corresponding slave.

12. A program instructing a computer to count cells transferred between a master and each of a plurality of slaves through a UTOPIA (Universal Test & Operations PHY interface for ATM) level-2 interface, the program comprising the steps of:
Identifying one of the plurality of slaves using slave address data on an address bus of the UTOPIA level-2 interface, wherein an identified slave is selected as a destination of a cell to be transmitted; and
counting start-of-cell indicating signals during a phase for the identified slave.
